# EUROPEAN PATENT APPLICATION

(11) **EP 0 958 944 A2**
(43) Date of publication of application: **24.11.1999**
(21) Application number: 99201569.3
(22) Date of filing: 19.05.1999
(51) Int. Cl.: B60B 7/00, B60B 7/06

(54) **Wheel cover assembly**

(30) Priority: 22.05.1998 US 83339
(71) Applicant: Mckechnie Vehicle Components Inc., Troy, Michigan 48098 (US)
(72) Inventor: Hogan, Scott A., Sylvan Lake, Michigan 48320 (US); Israel, Rajakumar, Berkley, Michigan 48702 (US); Johnson, David H., Farmington Hills, Michigan 48331 (US); Macnish, Dannie, South Lyon, Michigan 48178 (US)
(74) Representative: Wharton, Peter Robert

(57) **Abstract**

A composite wheel (10) includes an annular rim and an ornamental applique. The ornamental applique is mechanically locked to the annular rim (12) at the rim flange of the annular rim. A sealant is applied to one of the outboard surface of the annular rim and the inboard surface of the ornamental applique. The sealant (66), not being relied on for a locking feature, merely seals the space between the annular rim and the ornamental applique (46) from contaminants.

## Description

### BACKGROUND OF THE INVENTION

### 1. Field of the Invention

The invention relates to a vehicular wheel. More particularly, the invention relates to an ornamental vehicular wheel assembly of composite construction.

### 2. Description of the Related Art

Vehicular wheels are used in automobiles to interconnect the rotating hub and the tire. The wheel is a generally annular member having a rim with a pair of spaced rim flanges for engaging the bead of a tire. A spider is fixed within the rim. The spider typically includes a plurality of spokes interposing openings for aesthetic reasons and for venting air to the brakes. The spider also includes a plurality of lug stud holes for receiving lug studs protruding from the rotating hub. Lug nuts are threaded onto the lug studs for securely clamping the wheel and the tire to the rotating hub.

A composite wheel is disclosed in United States Patent 3,517,968. This disclosure describes a wheel having a decorative trim ring which is sealed using a rubber ring. Alternatively, the rubber ring may be replaced with a resilient adhesive material, RTV Silastic 892, a Dow Corning product. This adhesive is not, however, used as a sealant because it is the only ring of sealant in the preferred embodiment and it may be applied to one surface and allowed to cure before the trim ring is snapped into place. In other words, the adhesive is used in place of the rubber ring because of its resiliently deformable characteristics.

A composite vehicular wheel assembly is disclosed in United States Patent 5,368,370 which is of common assignment. The composite vehicular wheel assembly includes a wheel and a permanent ornamental surface treatment. The permanent ornamental surface treatment is mechanically locked to the vehicular wheel as well as being secured thereto via an adhesive. The ornamental surface treatment includes a wheel cover which extends between the hub portion of the wheel and the rim portion of the wheel. The use of an adhesive to temporarily hold the wheel cover to the wheel provides an unnecessarily rigid medium therebetween creating noise and harmonics which will reduce the life of the wheel cover.

United States Patent 5,597,213 discloses a wheel cover which is secured to a wheel using two adhesives. A first adhesive is used to secure the wheel cover to the wheel while the second adhesive, a long-term, long curing adhesive, cures. Once the second adhesive cures, the first adhesive is no longer required nor is it useful. Again, this structure provides an unnecessary rigidity between the wheel cover and the wheel reducing the ability for the wheel cover to dynamically or robustly react in the hostile environment in which it is placed. The adhesive, in combination with the wheel cover, generates a noise and harmonic which is undesirable. Further, the rigidity of the adhesive reduces the absorption quality of the composite vehicular wheel.

The application of adhesive has a second disadvantage. Typically, the adhesive used is a two part epoxy. Such a two part epoxy requires mixing immediately preceding the step of application which is an added cumbersome step. If the mixing is not done properly, the adhesion will not be thorough and the integrity of the composite wheel cannot be ensured. Another disadvantage in using an adhesive is the difficulty in cleaning objects to which the adhesive has adhered. Both the paired pieces and the environment in which the composite wheels are being manufactured must be cleaned. These products may include toxins or other chemicals which may require special handling.

When using an adhesive, the adhesive must cure over a period of time, oftentimes at elevated temperatures capable of being reached only by ovens. Therefore, the expense in manufacturing the products is increased due to the cycle time increase from the curing phase of assembly as well as the capital expense incurred in the extra oven capacity required for such adhesives.

Another disadvantage of a composite wheel using adhesive to keep it together is the temperature range of operation. The composite wheel is heated by the friction between the tire and the road and the brakes disposed adjacent thereto. The adhesive cannot withstand temperatures generated by the brakes in some conditions.

### SUMMARY OF THE INVENTION

A composite wheel assembly includes an annular rim defining a center axis having a pair of spaced rim flanges. A spider, concentrically fixed within the annular rim, is connected to a rotating hub. The spider includes a plurality of spokes. An ornamental applique extends over the annular rim and the spider and defines a space therebetween. The ornamental applique includes an annular outer connecting portion disposed adjacent one of the rim flanges and an annular inner connecting portion. The ornamental applique further includes a plurality of vent openings lined between the spokes of the spider and positioned between the inner and outer connecting portions. The composite wheel assembly further includes a sealant extending between the annular rim, the spider and the ornamental applique.

One advantage associated with the invention is the ability to fabricate a composite wheel assembly. Another advantage associated with the invention is the ability to fabricate a composite wheel assembly having an outboard surface of any design regardless of the spider and spoke design. Still another advantage associated with the invention is the ability to reduce the rigidity of the composite wheel assembly once it is fabricated. Yet another advantage associated with the invention is the ability to increase the resiliency of the ornamental applique when sealed to the annular rim of the wheel. Still another advantage is the ability to fabricate the composite wheel without excessive cure times or curing temperatures which would require dedicated ovens. Still another advantage is the ability of the composite wheel to withstand the high temperatures generated by brakes when in operation.

### BRIEF DESCRIPTION OF THE DRAWINGS

Other advantages of the invention will be readily appreciated as the same becomes better understood by reference to the following detailed description when considered in connection with the accompanying drawings, wherein:
Figure 1 is an exploded perspective view of the composite wheel assembly with a tire mounted to the rim;
Figure 2 is a perspective view of the composite wheel assembly mounted to a testing apparatus;
Figure 3 is an enlarged fragmentary cross-sectional view of the ornamental applique mounted on the spider and rim; and
Figure 4 is a graphic representation of test data obtained by using the testing apparatus and composite wheel assembly of Figure 2.

### DETAILED DESCRIPTION OF THE PREFERRED EMBODIMENT(S)

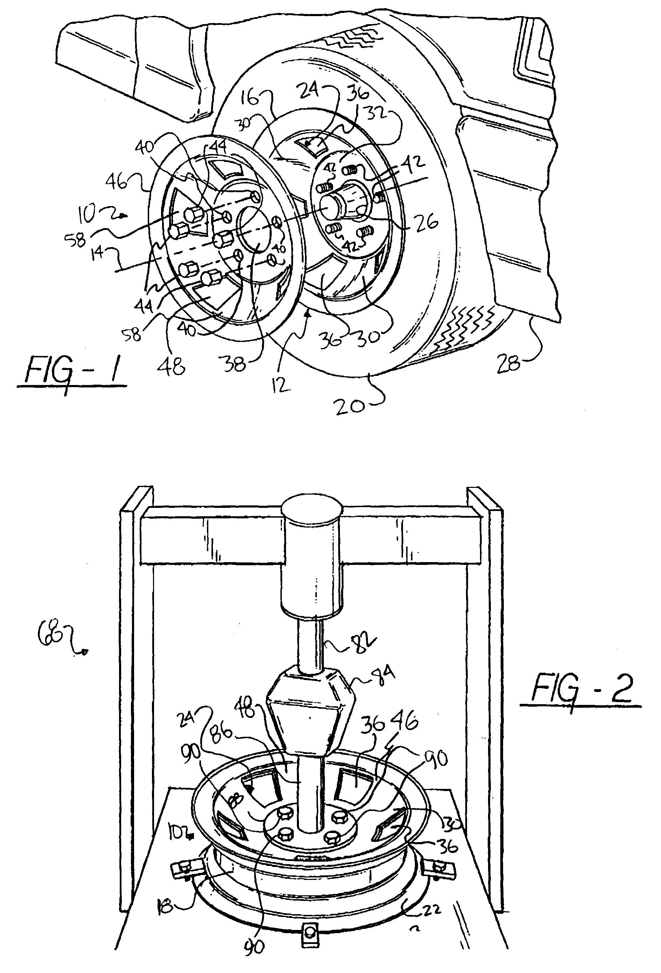

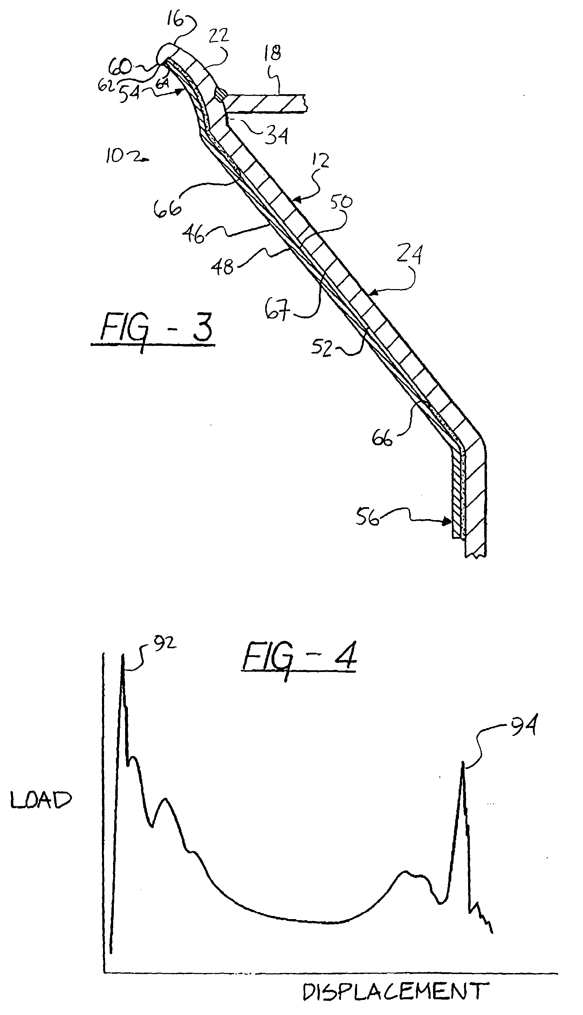

Referring to Figures 1 and 3, the invention, a composite wheel assembly, is generally shown at 10. The composite wheel assembly is a permanent ornamental surface treatment, preferably chrome-plated stainless steel, which eliminates the need for a separate detachable wheel cover. The wheel cover assembly 10 includes an annular rim, generally indicated at 12, defining a central axis 14. The annular rim 12, as shown in Figure 3, includes a pair of rim flanges 16 spaced on opposite sides of a well portion 18, over which a standard tube-type or tubeless tire 20 is mounted. A bead seat radius 22 interposes each of the rim flanges 16 and the well portion 18 for retaining tire beads (not shown) of the tire 20 therein.

The spider, generally indicated at 24, is concentrically fixed within the annular rim 12 and connects the annular rim 12 to a rotating hub 26 which is secured to a motor vehicle 28. The spider 24 includes a plurality of spokes 30 which radiate from a center section 32 to a spoke flange 34. Venting spaces 36 interpose the adjacent spokes 30.

The center section 32 of the spider 24 includes a center hole 38 for receiving a protruding portion of the rotating hub 26 and its dust cap, if any. The rotating hub 26 may be any one of a number of shapes.

Disposed circumferentially about the center hole 38 are a plurality of lug stud holes 40. Standard threaded lug studs 42 extend from the rotating hub 26 and pass through the lug stud holes 40. As shown in the Figures, the composite wheel assembly 10 includes five such lug stud holes 40. In typical fashion, lug nuts 44 are threaded onto the lug studs 42 to secure the composite wheel assembly 10 to the rotating hub 26.

The annular rim 12 and the spider 24 sections of the composite wheel assembly 10 may be manufactured from fabricated steel, fabricated aluminum, cast aluminum, forged aluminum or any combination thereof.

An ornamental applique is generally indicated at 46 in the Figures. The ornamental applique 46 overlaps the annular rim 12 and the spider 24 to present an ornamental surface treatment 48 to the visible outer portions of the composite wheel assembly 10. The ornamental surface 48 is the outboard surface 52 of the ornamental applique 46. The inboard surface 50 of the ornamental applique 46 does not require an aesthetically pleasing surface treatment as it will face or abut against or be disposed adjacent the outboard surface 52 of the annular rim 12 and the spider 24.

The ornamental applique 46 has an annular outer connecting portion 54 disposed adjacent the outer of the two rim flanges 16. The annular outer connecting portion 54 overlies the rim flange 16. The ornamental applique 46 also includes an annular inner connecting portion 56 which overlies at least a portion of the center section 32 of the spider 24.

The ornamental applique 48 may include a plurality of vent openings 58 aligned between the spokes 30 of the spider 24. The vent openings 58 are typically radially positioned between the annular inner connecting portion 56 and the annular outer connecting portion 54. Preferably, the plurality of vent openings 58 correspond to complement precisely with the open portions between the spokes 30, as is best illustrated in Figure 1. It may be appreciated by those skilled in the art that the plurality of vent openings 58 may not exactly complement the venting spaces 36 in the annular rim 12.

With specific reference to Figure 3, a locking mechanism 60 is shown to include an annular catch 62 formed in the outer rim flange 16. The annular catch 62 holds the ornamental applique 46 in place. The peripheral edge 64 must be forced into engagement behind the annular catch 62 forcing the ornamental applique 46 into permanent mechanical engagement with the annular rim 12 to create a composite wheel assembly 10. This locking mechanism 60 is also disclosed in United States Patent 5,368,370 which is expressly incorporated herein by reference. As is discussed below, the locking mechanism is the only mechanism which is permanently securing the ornamental applique 46 to the annular rim 12 to create the composite wheel assembly 10.

In one embodiment a one part sealant 66 extends between the annular rim 12, the spider 24 and the ornamental applique 46. The sealant 66 may be silicone based and extends between the annular rim 12, the spider 24 and the ornamental applique 46 in a portion of the space 67 defined therebetween. More specifically, the sealant 66 does not have to fill the space 67 between the ornamental applique 46 and the annular rim 12 and the spider 24. The sealant 66 only needs to extend around the edges of the ornamental applique 46 to prevent contaminants from getting between the ornamental applique 46 and the annular rim 12 and the spider 24. The sealant 66 is capable of operating in a temperature between -75° F and 400° F.

The sealant 66 may be applied to one of the inboard surface 50 of the ornamental applique 46 and the outboard surface 52 of the annular rim 12. Once the sealant 66 is applied to either of the inboard surface 50 or the outboard surface 52, the ornamental applique 46 may be secured to the annular rim 12 using the locking mechanism 60.

Although it has been known to use adhesives between the ornamental applique 46 and the annular rim 12 in other composite wheel assemblies, the use of a sealant 66 provides new and unexpected results. Referring to Figure 2, a test assembly is generally indicated at 68. The composite wheel assembly 10 is secured to a base 70 of the test assembly 68 by a plurality of fasteners 72. The orientation of the composite wheel assembly 10 is such that the ornamental applique 46 is facing upwardly away from the base 70.

The test assembly 68 includes a frame 74 including two upright members 76 and a cross member 78. A retracting device 80 extends down from the cross member 78. The retracting device 80 may be hydraulically operated or it may incorporate a motor having a standard gearing for retracting a shaft 82 therein. A scale device 84 is connected to the shaft 82 to record the force that is being applied to the ornamental applique 46. A secondary shaft 86 extends down from the scale 84. A mounting plate 88 is fixedly secured to the ornamental applique 46 via bolts 90 or other such fasteners. When the retracting device 80 pulls the shaft 82 upwardly, the mounting plate 88 pulls the ornamental applique 46 away from the annular rim 12 and the spider 24 to which the ornamental applique 46 is attached. A measuring device (not shown) is used to measure actual displacement of the ornamental applique 46 with respect to the composite wheel 10.

By using this test assembly 68, the following data was measured relating to the maximum loads needed to obtain a maximum displacement between the hub portion of the ornamental applique 46 and the annular rim 12. The test varied the substance, if used, between the annular rim 12 and the ornamental applique between an epoxy, a sealant RTV 128 and a second sealant RTV 5818. All substances were tested with and without a mechanical lock.

| **MAXIMUM LOADS AND DISPLACEMENTS** | | | | |
|---|---|---|---|---|
| **Sample ID** | **Substance** | **Mechanical Lock** | **Max Load (lbs)** | **Max Displacement (in)** |
| A1 | Epoxy | Yes | 4996 | 6.1 |
| A2 | Epoxy | Yes | 4358 | 6.4 |
| A3 | Epoxy | Yes | 4013 | 6.1 |
| A4 | Epoxy | Yes | 4714 | 6.1 |
| A5 | Epoxy | Yes | 4412 | 6.2 |
| B1 | Epoxy | No | 4082 | 5.0 |
| B2 | Epoxy | No | 4311 | 5.2 |
| B3 | Epoxy | No | 3238 | 4.7 |
| B4 | Epoxy | No | 4048 | 4.7 |
| B5 | Epoxy | No | 4738 | 5.0 |
| C1 | RTV 128 | Yes | 2883 | n/a |
| C2 | RTV 128 | Yes | 3874 | 6.2 |
| C3 | RTV 128 | Yes | 4231 | 6.5 |
| C4 | RTV 128 | Yes | 3946 | 6.1 |
| C5 | RTV 128 | Yes | 3972 | 6.7 |
| D1 | RTV 128 | No | 3466 | 6.5 |
| D2 | RTV 128 | No | 3570 | n/a |
| D3 | RTV 128 | No | 3430 | 5.0 |
| D4 | RTV 128 | No | 3617 | 7.0 |
| D5 | RTV 128 | No | 3647 | 6.8 |
| E1 | RTV 5818 | Yes | 4101 | 6.4 |
| E2 | RTV 5818 | Yes | 4268 | 7.6 |
| E3 | RTV 5818 | Yes | 4068 | 6.5 |
| E4 | RTV 5818 | Yes | 4109 | 6.7 |
| E5 | RTV 5818 | Yes | 3992 | 6.3 |
| F1 | RTV 5818 | No | 4074 | 7.0 |
| F2 | RTV 5818 | No | 3862 | 6.3 |
| F3 | RTV 5818 | No | 2946 | n/a |
| F4 | RTV 5818 | No | 4082 | n/a |
| F5 | RTV 5818 | No | 4197 | 7.0 |
| G1 | None | Yes | 1804 | 1.1 |
| G2 | None | Yes | 1491 | 0.9 |
| G3 | None | Yes | 1779 | 1.1 |
| G4 | None | Yes | 1601 | 0.8 |
| G5 | None | Yes | 1737 | 1.1 |

Referring to Figure 4, a representative test result is shown in graphic form with load being graphed as a function of displacement. The graph represents the load versus displacement for sample E5 using a sealant RTV 5818, a silicone sealant produced by GE Silicones, a unit of General Electric Company. The first peak 92 represents the force that is required to overcome the cohesion of the sealant 66. The second peak 94 represents the force required to overcome the mechanical lock along with the circumferential ring of sealant 66 at the rim flange 16 provided by the locking mechanism 60. As it may be appreciated by viewing Figure 4, the ornamental applique 46 is deformed considerably with little force between the overcoming of the sealant 66 and the locking mechanism 60. The new and unexpected results are the ability for two sealants, namely, RTV 128 and RTV 5818, which are products of GE Silicones, when compared to an epoxy typically used in the art. The forces required to overcome the sealants 66 were similar to that of the epoxy. Further, new and unexpected results occurred when noting the displacement before failure, the fifth column in the preceding table. The ornamental applique 46 extends through a greater displacement when it is attached to the annular rim 12 by a mechanical lock having a sealant 66 placed therebetween than in tests having the ornamental applique 46 being attached to the annular rim 12 by a locking mechanism 60 in combination with an epoxy. Using a sealant 66 allows the ornamental applique 46 to be less rigid and capable of moving through a larger displacement before being removed from the annular rim 12 of the composite wheel assembly 10. This result renders the sealant 66 used in combination with the locking mechanism 60 as an advantage which was not predictable by the prior art.

The invention has been described in an illustrative manner. It is to be understood that the terminology which has been used is intended to be in the nature of words of description rather than of limitation.

Many modifications and variations of the invention are possible in light of the above teachings. Therefore, within the scope of the appended claims, the invention may be practiced other than as specifically described.

## Claims

1. A composite wheel assembly comprising:
an annular rim defining a center axis and having a pair of spaced rim flanges;
a spider concentrically fixed within said annular rim for connecting to a rotating hub, said spider including a plurality of spokes;
an ornamental applique extending over said annular rim and said spider defining a space therebetween, said ornamental applique having an annular outer connecting portion disposed adjacent one of said rim flanges, an annular inner connecting portion and a plurality of vent openings aligned between said spokes of said spider and positioned between said inner and outer connecting portions; and
a sealant extending between said annular rim, said spider and said ornamental applique.

2. A composite wheel assembly as set forth in Claim 1 wherein said sealant is silicone based.

3. A composite wheel assembly as set forth in Claim 2 wherein a mechanical lock locks said ornamental applique to said annular rim.

4. A composite wheel assembly as set forth in Claim 3 wherein said sealant extends between said ornamental applique, said annular rim and said spider in a portion of said space.

5. A composite wheel assembly as set forth in Claim 4 wherein said sealant is capable of operating in a temperature range between -75°F and 400°F.

6. A composite wheel assembly comprising:
an annular rim defining a center axis and having a pair of spaced rim flanges;
a spider concentrically fixed within said annular rim for connecting to a rotating hub, said spider including a plurality of spokes;
an ornamental applique extending over said annular rim and said spider defining a space therebetween, said ornamental applique having an annular outer connecting portion disposed adjacent one of said rim flanges, an annular inner connecting portion and a plurality of vent openings aligned between said spokes of said spider and positioned between said inner and outer connecting portions;
a sealant extending between said annular rim, said spider and said ornamental applique; and
a mechanical lock to lock said ornamental applique to said annular rim.

7. A composite wheel assembly as set forth in Claim 6 wherein said sealant extends between said ornamental applique, said annular rim and said spider in a portion of said space.

8. A composite wheel assembly as set forth in Claim 7 wherein said sealant is capable of operating in a temperature range between -75°F and 400°F.

9. A method for fabricating a composite wheel from a wheel having an outboard surface and an annular rim, and an ornamental applique having an inboard surface and a mechanical lock, the method comprising the steps of:
applying a sealant to one of the outboard surface of the wheel and the inboard surface of the ornamental applique;
aligning the ornamental applique into a coaxial position with the wheel;
abutting the ornamental applique against the wheel; and
locking the ornamental applique to the wheel using the mechanical lock.

10. A method as set forth in Claim 9 wherein the step of applying a sealant includes the step of selectively applying the sealant to a portion of one of the outboard surface of the wheel and the inboard surface of the ornamental applique.

11. A method as set forth in Claim 10 wherein the step of selectively applying a sealant includes the step of selectively applying the sealant along edges of one of the outboard surface of the wheel and the inboard surface of the ornamental applique.
